# EUROPÄISCHE PATENTSCHRIFT

(11) **EP 3 699 344 B1**
(45) Veröffentlichungstag und Bekanntmachung des Hinweises auf die Patenterteilung: **01.01.2025**
(21) Anmeldenummer: 20156271.7
(22) Anmeldetag: 10.02.2020
(51) Int. Cl.: B29C 70/54

(54) **VERFAHREN UND VORRICHTUNG ZUR HERSTELLUNG EINES FORMTEILS AUS EINEM FASERWERKSTOFF**
METHOD AND DEVICE FOR PRODUCING A MOULDED COMPONENT MADE OF FIBRE MATERIAL
PROCÉDÉ ET DISPOSITIF DE FABRICATION D'UNE PIÈCE MOULÉE À PARTIR D'UNE MATIÈRE FIBREUSE

(30) Priorität: 21.02.2019 DE 102019104369
(43) Veröffentlichungstag der Anmeldung: 26.08.2020
(73) Patentinhaber: Technische Universität Dresden, 01067 Dresden (DE)
(72) Erfinder: Siwek, Sebastian, 01219 Dresden (DE); Wagenführ, André, Prof. Dr., 01109 Dresden (DE)
(74) Vertreter: Gottfried, Hans-Peter

(56) Entgegenhaltungen:
- WO-A1-2016/055072
- DE-B- 1 205 913
- DE-C- 867 949
- US-A- 4 702 376

## Beschreibung

Die Erfindung betrifft ein Verfahren und eine Vorrichtung zur Herstellung eines Formteils aus einem Faserwerkstoff durch Verdichten und Umformen des als ein Faservlies vorliegenden Faserwerkstoffs mittels einer Formkontur, die die spätere Form des Formteils vorgibt. Die Verdichtung und das Umformen des Faservlieses erfolgen durch ein unter Druck stehendes Fluid, indem das Faservlies gegen die Formkontur gedrückt wirdDer Fluiddruck wird durch Evakuieren in dem Faservlies als ein Differenzdruck, auch als Unterdruck bezeichnet, erzeugt. Eine über die gesamte Fläche fluiddichte Dichtlage, die für ein Fluid, das von der vom Faservlies abgewandten Seite aus unter Druck einwirkt, undurchdringlich ist, und wobei die Dichtlage wenigstens einen Anschlussstutzen zum Anschluss einer Vakuumleitung umfasst, wird über dem Faservlies fluiddicht angebracht, wobei die Dichtlage das Eindringen des Fluids in das Faservlies verhindert. Faserwerkstoffe umfassen Werkstoffe, die aus Partikeln lignocelluloser Herkunft gebildet sind. Darunter fallen auch "Faserreststoffe" und "fasrige Reststoffe", das wären beispielsweise Altpapier, Stroh oder Pflanzenschäben.

Der strukturelle Zusammenhalt von Holzfaserwerkstoffen bzw. Faserwerkstoffen beruht im Wesentlichen auf der Verfilzung der Holzfasern bzw. der lignocellulosen Fasern und der Aktivierung ihrer eigenen Bindekräfte, es können aber auch zusätzliche Bindemittel eingesetzt werden. Je nach dem angewandten Herstellungsverfahren, insbesondere der trockenen oder der nassen Vliesbildung, und dem Grad der Verdichtung des Faservlieses werden Untergruppen unterschieden. Bei dem Faserwerkstoff können die Fasern aus Holz oder Einjahrespflanzen gewonnen werden, somit beispielsweise auch aus Papier, Altpapier, Holzstoff, Zellulose, Flachs, Hanf oder Gras.

Beim Nassverfahren, bei nasser Vliesbildung, bei der die Vliesbildung aus einem wässrigen Faserbrei erfolgt, ist eine energieaufwändige Trocknung der Papier- bzw. Faserformteile und der Presspanteile, allgemein Naturfasergebilde, erforderlich. Faserformteile aus dem Fasergussverfahren, mit dünnen Wandstärken sind nach deren Abformung, also mit einem Trockensubstanzgehalt um 30 %, zu instabil für eine endgültige Entformung und bedürfen kostenaufwändiger Transferwerkzeuge.

Formteile werden durch flexible Bänder und Presswerkzeuge bzw. Werkzeugplatten verdichtet. Die Trocknung findet zum Teil über mehrere Tage hinweg in Öfen bei 140 °C und höheren Temperaturen statt. Durch die Anwendung unterschiedlicher Verdichtungsmaterialien und vor allem wegen der Schwierigkeit einer gleichmäßigen bzw. den Erfordernissen entsprechende Dicke und Dichte der Partikel direkt auf den Untergrund bzw. die Form entstehen unterschiedliche Dichtebereiche in den Bauteilen. Das Problem der ungleichmäßigen Dichte zeigt sich vor allem bei dreidimensional geformten Erzeugnissen, die nicht ausschließlich ebene Bereiche aufweisen. Die Trocknung ist sehr energieaufwändig, langwierig und somit teuer.

Beim Faserguss werden zunächst aus einer Suspension heraus gegen eine poröse Form, die die vorgesehene dreidimensionale Geometrie vorgibt und den ungebundenen Wasseranteil passieren lässt, angesaugt. Danach werden die so gebildeten, noch feuchten Faserkuchen in Trocknungswerkzeuge überführt, damit sie aufgrund ihrer geringen Festigkeit nicht zusammenfallen. Die hierfür notwendigen zusätzlichen Werkzeuge sind sehr aufwändig und teuer. Aus diesem Grund kommen Faserformteile nur für die Fertigung großer Stückzahlen in Betracht und bedürfen in der Regel einer langen Werkzeugentwicklungsphase.

Das Ansaugen, der Einsatz eines Vakuums, ist daher in dieser Weise nur beim Nassverfahren möglich, da sich anderenfalls durch ein gasdurchlässiges Faservlies kein Vakuum aufbaut. Andere Verfahren zur Formgebung mittels Vakuum sind aus dem Stand der Technik bekannt, beispielsweise aus der Druckschrift JP H 09314653 A. Ein Stapel harzgetränkter Papierbögen wird mittels Vakuum gegen eine Form gedrückt. Der Einsatz von Harz bietet ebenfalls die Eigenschaften eines Nassverfahrens, ohne dass hingegen ein Wasseranteil herausgetrocknet werden muss. Eine Anwendung des vorgeschlagenen Verfahrens auf die Herstellung von Holz- bzw. Faserwerkstoffen ist aber schon allein wegen des unerwünschten Harzeinsatzes nicht möglich.

Laminierverfahren auf Basis von Kunstharz bedienen sich auch des Vakuums, um die zusammenzufügenden Schichten (Prepreg-Lagen) zu komprimieren (vgl. https://www.r-g.de/wiki -> Gebräuchliche Fertigungsverfahren; Abruf vom 24.01.2019). Vor allem wird darauf abgezielt, den Faseranteil des Laminates zu erhöhen, indem überschüssiges Harz herausgedrückt wird, und um leichte Stützstoffe, wie z. B. Schaumkunststoffe oder Waben, mit hochfesten Deckschichten aus Harz und Gewebe zu verkleben und so ein extrem leichtes und steifes Bauteil herzustellen. Hier werden die Prepreg-Lagen mit einer Lochfolie, die das überschüssige Harz hindurchlässt, einem Abreißgewebe, einem Saugvlies, das das überschüssige Harz aufnimmt, und einer Vakuumfolie, die die für den Aufbau des Vakuums nötige Dichtheit schafft, bedeckt.

Ein Vakuumsack, in den Teile eingebracht und nach dem Evakuieren mittels des von außen wirkenden atmosphärischen Drucks verpresst werden können, ist ebenfalls bekannt. Ein solcher Vakuumsack wird beschrieben unter https://www.steinbachag.de/de/forming-solutions/produkte/ produktgruppe/vakuumsack.html und https://neureiter-shop.at/produkte/ holzbearbeitung/ maschinen/ membranpressen/barth-vakuumsack.html (Abrufe vom 05.02.2019).

Die Druckschriften DE 879 355 B, WO 2016/055073 A1 und DE 602 17 524 T2 beschreiben weitere Nassverfahren für die Herstellung eines im Wesentlichen geschlossenen Hohlkörpers aus einer Faserstoffaufschlämmung. Dabei wird die Suspension, nachdem sie in die Form eingebracht und an der Oberfläche der Form verteilt wurde, gegen die innere Oberfläche gedrückt bzw. nach Druckschrift DE 879 355 B mittels Vakuum an die äußere Oberfläche gepresst. Dies erfolgt mittels eines in die Form eingeführten Ballons, der auch beheizbar ist, um zur Trocknung der Suspension beizutragen. Zum Entformen des Hohlkörpers kann gemäß Druckschrift WO 2016/055073 A1 zudem über Kanäle in der Oberfläche ein Druck aufgebracht werden. Insbesondere die Anwendung von Vakuum ist auf das Nassverfahren beschränkt, da nur dabei eine Gasdichtigkeit im erforderlichen Umfang erreicht werden kann. Außerdem bleibt eine energieintensive Trocknung weiterhin erforderlich, ggf. nach vorausgehendem Transfer.

Nachteilig ist, dass die Trocknung der Formteile häufig über mehrere Tage hinweg in Öfen bei 140 °C oder noch höheren Temperaturen stattfindet. Faserformteile werden nach dem Ansaugen durch Transfer in Trocknungswerkzeuge überführt, in denen die Geometrie aufgenommen wird, so dass der noch feuchte Faserkuchen nicht zusammenfällt. Die zusätzlichen Trocknungswerkzeuge sind sehr aufwändig und teuer, sodass Faserformteile nach dem herkömmlichen Verfahren nur in großen Stückzahlen wirtschaftlich sinnvoll herstellbar sind und zudem die für den Faserguss nötigen Werkzeuge einer langen Entwicklungsphase bedürfen.

Vorgesehen ist nach der Druckschrift DE 28 17 479 A1 weiterhin die Herstellung einer Faservliesbahn im Nassverfahren, wobei das Vakuum zur Entwässerung vorgesehen ist (Fig. 5 i.V.m. S. 15, 16). Nasse und trockene Schichten werden mittels Walzen verbunden. Vakuum wird zudem genutzt, um die so erlangte, insgesamt vierschichtige Bahn auf einen anderen Zylinder zur Konsolidierung mittels Walzendruck und Wärme zu übertragen. Eine abschließende energieintensive Trocknung, ggf. nach vorausgehendem Transfer, bleibt auch bei diesem Verfahren weiterhin erforderlich.

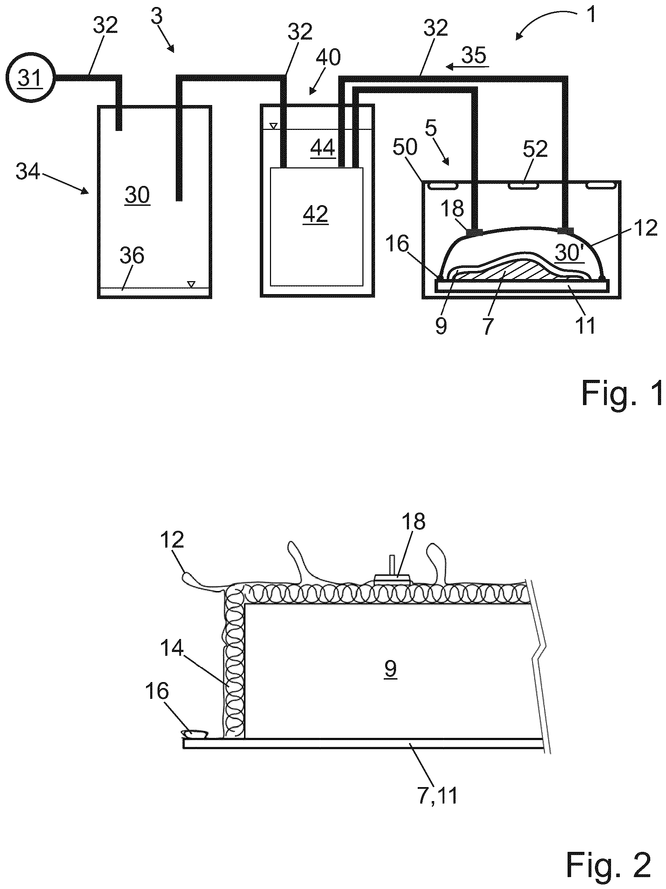

Aus der Druckschrift DE 28 17 479 A1 ist ein Verfahren bekannt, bei dem im Trockenverfahren auf einem endlosen Formsieb abgelegte Zellulosefasern über einen Vakuumkasten mit Vakuum beaufschlagt werden (vgl. Fig. 1 - 4, Beschreibung S. 10). Durch das Vakuum wird die eingeschlossen Luft aus der trocken gelegten Fasermatte gesaugt. Die Verdichtung erfolgt hingegen ausschließlich über Druckwalzen.

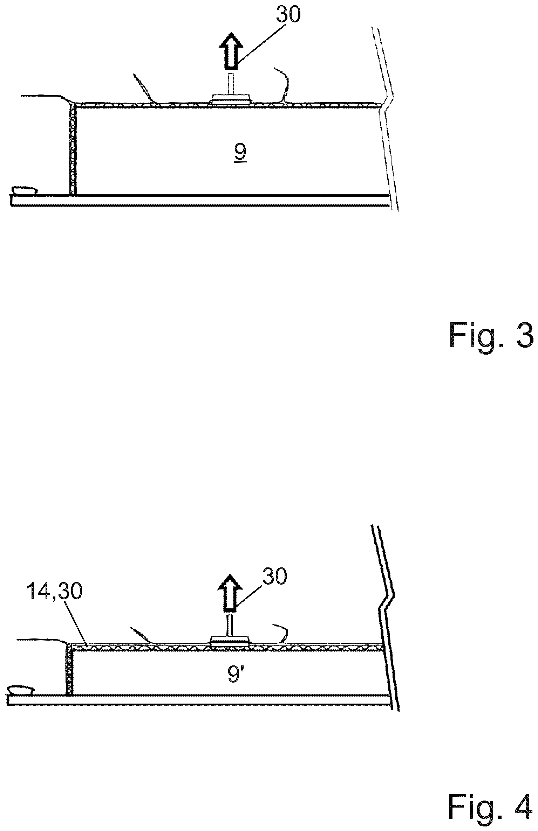

Nach der Druckschrift DE 23 64 025 C3 ist die Herstellung von gepressten Formkörpern aus Lignozellulose-Fasern aus einer trockenen Fasermatte vorgesehen. Als eine Möglichkeit der auf die Herstellung der Fasermatte folgenden Formgebung ist auch das Vakuumziehen genannt (Spalte 5, Zeilen 6 - 10). Die hierzu notwendige Gasdichtigkeit wird jedoch erst durch eine mittig in der Fasermatte angeordnete Klebefolie, eine Elastomerschicht (vgl. auch Fig. 3, Bezugszeichen 9), erreicht. Die Fertigung der beidseitig an der Elastomerschicht angeordneten Fasermatte ist aufwändig und nicht zuletzt durch den Einsatz des Elastomers kostenintensiv.

Die Druckschrift DE 40 40 925 A1 beschreibt ein Verfahren und eine Vorrichtung zum Herstellen von Formteilen aus ebenen Zuschnitten aus mit Bindemitteln versehenen Zellulose- oder Lignozellulose-Wirrfaservliesen. Der Zuschnitt wird durch Fluiddruck gegen die Formkontur gedrückt. Sofern keine dichtende Kaschierung des Zuschnitts vorhanden ist, erfolgt die "Abdichtung der Zuschnitte [...] gegenüber dem Fluid [...] durch flexible Materialien". Diese werden "zwischen das Vliesmaterial und das Fluid gebracht und nach der Formgebung wieder entfernt" (Spalte 2, Zeilen 26 - 30). Neben Heißdampf, der zugleich der Erwärmung des Vliesmaterials - auch zur Aktivierung zusätzlicher Bindefasern - dient (Sp. 2, Zeilen 39 - 48), ist auch der Einsatz von Vakuum vorgesehen. Dieses dient allerdings nur dazu, "eine erwärmte tiefziehfähige Kaschierfolie mit rückseitiger Beschichtung mit einem durch Wärme aktivierbaren Haftvermittler in das formgebende Werkzeugteil" zu ziehen (Spalte 3, Zeilen 58 - 59). Die eigentliche Formgebung des Vliesmaterials erfolgt hingegen durch den unter Druck einströmenden Heißdampf (vgl. Fig. 2).

Die Druckschrift DE 867 949 B beschreibt ein Verfahren und eine Einrichtung zum Trocknen und Aushärten von Faserstoffformkörpern unter Anwendung eines Unterdrucks für die Trocknung. Dabei dient der Randstreifen des Presslings selbst als Dichtungsmittel zwischen dem umgebenden Luftdruck und dem auf den Pressling wirkenden Unterdruck. Dadurch ist die Dichtung auf die von dem Pressling vorgegebenen Eigenschaften beschränkt und der anwendbare Unterdruck entsprechend begrenzt.

Die Druckschrift DE 896 005 B schlägt ein Verfahren zum Pressen bzw. Trocknen von Fasermasseschichten vor. Dabei sind Pressformen vorgesehen, deren Oberfläche durchlässig ist und mittels eines angelegten Vakuums das Zusammenpressen der Fasermasseschicht unterstützt werden kann. Durch die lokale Wirkung an den Durchlässen und deren Verschluss durch die Fasermasse vor allem bei höherem Vakuum ist der dadurch hervorgerufene Effekt jedoch begrenzt.

Aus der Druckschrift US 3 948 708 A ist ein Verfahren zur Umformung einer Platte in einer Form unter Einsatz von Warmwasser und Druck oder Vakuum bekannt. Hierzu weist die Formoberfläche Öffnungen auf, über die das Vakuum angelegt werden kann. Eine Deckschicht sorgt für eine Verteilung der wirkenden Kräfte. Jedoch kommt für das Verfahren eine bereits vorgefertigte Platte zum Einsatz, deren Bindemittel durch die eingesetzte Wärme nochmals erweicht wird, und die Deckschicht ist zum Verbleib auf der Platte vorgesehen.

Die Druckschrift DE 867 949 C offenbart ein Verfahren zur Herstellung eines Formteils aus einem Faserwerkstoff (vgl. Anspruch 1) durch Verdichten und Umformen (durch ein Pressverfahren, vgl. S. 2, Z.39-43, somit werden sowohl die Dichte als auch die Form verändert) des als ein Faservlies (vgl. Preßling 8) vorliegenden Faserwerkstoffs mittels einer Formkontur (d. h. Formen 1 oder Formen d, e und f - Abb. 1 und 2), die die spätere Form des Formteils vorgibt (vgl. S. 2, Z. 73-75). Die Verdichtung und das Umformen des Faservlieses erfolgen durch ein unter Druck stehendes Fluid (vgl. S. 2, Z. 51-54 und Z. 103-106), indem das Faservlies gegen die Formkontur gedrückt wird (vgl. Abb. 1-2), wobei der Fluiddruck durch Evakuieren in dem Faservlies als ein Unterdruck erzeugt wird (vgl. S. 2, Z. 51-54 / Z. 103-106). Eine über die gesamte Fläche fluiddichte Dichtlage (d. h. Formen g) wird über dem Faservlies fluiddicht (vgl. Ringe i, i und S. 2, Z. 103-106) angebracht, die das Eindringen des Fluids in das Faservlies verhindert. Es wird vorgeschlagen, dass das Faservlies zur Trocknung auf eine Trocknungstemperatur erwärmt wird (vgl. S. 2, Z. 68-70). Der durch Verdampfen des Wassers aus dem Faservlies entstehende Wasserdampf wird über eine Abstandsschicht (d. h. Siebe h, h, vgl. s. 2, z. 77 und z. 4 8-4 9) von der Oberfläche des Faservlieses abgeführt, die die Dichtlage an ihrer Innenseite zumindest in dem zum Faservlies hin weisenden Bereich aufweist (vgl. Abb. 1 und 2).

Die Druckschrift US 4 702 376 A beschreibt ein Verbundmaterial für einen Vakuumsack (vgl. Ab. 2 und Sp. 2, Z. 8-11), der aus einem flexiblen Gewebe aus Polymermaterial besteht, das auf einer Seite mit einer hohlraumfreien Elastomerschicht verbunden ist. Die freiliegende Oberfläche des einem Gewirkes auf der Innenseite, die mit einem Trennmittel behandelt ist, bietet Luftdurchlässe, wenn sie während der Vakuumverpackung gegen die Oberfläche eines Gegenstandes gedrückt wird. Ein Anschluss zur Vakuumleitung ist vorgesehen (vgl. Sp. 3, Z. 3-5). Die Abstandschicht ist um zwei Achsen umformbar (vgl. Sp. 2, Z. 31 ). Sie sollte eine ausreichende Druckstabilität aufweisen, um den Umformvorgang zu ermöglichen, und eine solche Porosität aufweisen, die eine gleichmäßige Evakuierung und eine ungehinderte Abführung im Unterdruck entstehenden eines Wasserdampf-Luft-Gemischs über den wenigstens einen Anschlussstutzen ermöglicht (vgl. Sp. 2, Z. 54-63).

Die Aufgabe der vorliegenden Erfindung ist die Verbesserung des Herstellungsverfahrens für Naturfaserbauteile, von Formteilen aus einem Faserwerkstoff, im Nassverfahren.

Die Aufgabe wird gelöst durch ein Verfahren zur Herstellung eines Formteils aus einem Faserwerkstoff durch Verdichten und insbesondere auch dreidimensionales Umformen eines als ein bevorzugt bahnförmiges, in einem vorteilhaften Nassverfahren - damit vorzugsweise bindemittelfrei - hergestellten Faservlieses, das besonders bevorzugt als ein mehrlagiges, verdichtbares, feuchtes Vlies vorliegt. Dem Verfahren liegt in dieser vorteilhaften Ausgestaltung zunächst ein Laminierprozess zugrunde. Der Faserkuchen wird nicht wie nach dem Stand der Technik üblich unmittelbar aus einer Suspension angesaugt. Stattdessen werden mehrere Lagen Faservlies auf das Formwerkzeug aufgebracht und auf diese Weise ein Faserkuchen mit etwa 30 % Trockengehalt und einer gleichmäßigen Dichte und Dicke erzeugt.

Alternativ zum schichtweisen bzw. mehrlagigen Aufbringen ist es vorgesehen, ein zuvor erzeugtes Faservlies in der letztendlich gewünschten Dicke einlagig aufzubringen. Die Dicke des Lagenaufbaus ist variabel, denn es kann eine gleichmäßige, aber ebenso auch eine variierende Wandstärke hergestellt werden. Eine besonders vorteilhafte belastungsgerechte Dimensionierung der Wandstärken im Bauteil wird so möglich und stellt einen besonderen Vorteil der vorliegenden Erfindung dar.

Der zu Beginn des erfindungsgemäßen Verfahrens vorliegende Faserwerkstoff wird mittels einer Formkontur, die die spätere Form des Formteils vorgibt, umgeformt. Die Verdichtung und das Umformen des Faservlieses erfolgen durch ein unter Druck stehendes Fluid, insbesondere die Umgebungsluft unter Atmosphärendruck, indem das Faservlies mit einer ersten, der Formkontur zugewandten Seite gegen die Formkontur gedrückt wird. Der Fluiddruck wirkt von der zweiten, von der Formkontur abgewandten Seite her. Der Fluiddruck wird durch Evakuieren aufgebaut. Das Evakuieren geht mit dem Erzeugen eines Unterdrucks, nachfolgend als Druckdifferenz bezeichnet, in dem Faservlies von der ersten Seite des Faservlieses einher. Dadurch ruft die Druckdifferenz zum vorherrschenden Luftdruck den Fluiddruck hervor, der auf die zweite Seite des Faservlieses zumindest in Höhe des Umgebungsluftdrucks einwirkt.

Eine über die gesamte Fläche fluiddichte Dichtlage über dem Faservlies, die an der zweiten Seite des Faservlieses fluiddicht angebracht wird, verhindert das unkontrollierte Eindringen des Fluids, insbesondere der Umgebungsluft, in das Faservlies. Die Dichtlage kann auch einen das Faservlies zusammen mit einer Formkontur vollständig umgebenden und umfänglich zugeklemmten Übermaßsack, nachfolgend als Vakuumsack bezeichnet, ausbilden. Die Dichtlage umfasst wenigstens einen Anschlussstutzen zum Anschluss an eine Vakuumpumpe zur Erzeugung der Druckdifferenz.

Erfindungsgemäß wird eine Trocknungstemperatur vorgesehen und abhängig davon die Druckdifferenz gewählt, der geringer ist als der Dampfdruck von Wasser bei der Trocknungstemperatur. Die bei der Kompression aus dem Faservlies entweichende Luft und der durch Verdampfen des Wassers aus dem Faservlies entstehende Wasserdampf werden über eine Abstandsschicht von der gesamten Oberfläche des Faservlieses abgeführt, zumindest von der von der Formkontur abgewandten Seite. Die Abstandsschicht ist an der Dichtlage oder dem Vakuumsack an der Innenseite zumindest in dem zum Faservlies hin weisenden Bereich angeordnet. Die Aufgabe der Abstandsschicht, ausgeführt als ein technisches Abstandstextil, ist es einen evakuierbaren bzw. im Verfahren evakuierten Raum oberhalb der Oberfläche des Faservlieses bzw. des Formteils zu schaffen, in dem verdampft werden kann und aus dem der Dampf, bei gleichzeitiger Verdichtung des Fasermaterials, auch abgeführt werden kann. Somit muss das Abstandstextil so fein sein, dass keine Fasern aus dem Faservlies hindurch können, es jedoch dampfdurchlässig genug bleiben und dem Wasserdampf-Luft-Gemisch nur wenig Widerstand entgegensetzen. Als das technische Abstandstextil kommen Abstandsgewebe, Abstandsgewirke oder Ringgewebe. Entwässerung und Trocknung durch das Faservlies und die Verdampfung erfolgen in dem Fall an dessen von der Formkontur abgewandten Oberfläche.

Um auch von der Seite des Faservlieses, die an der Formkontur anliegt, Wasserdampf abführen zu können, ist es vorgesehen, auch die Oberfläche der Formkontur mit einer Abstandsschicht zu versehen. Diese kann beispielsweise ebenfalls als ein aufgebrachtes technisches Abstandstextil oder als poröse bzw. mit Bohrungen und Kanälen ausgestattete Oberfläche der Formkontur selbst ausgebildet sein. Das Faservlies trocknet dadurch schneller, weil mehr Verdampfungsoberfläche zur Verfügung steht.

Der Druck für die Verdichtung wird nicht, wie aus dem Stand der Technik bekannt, durch Umgebungsdruck, Überdruck oder Werkzeuge aufgebracht, sondern durch eine Vakuummembran, nachfolgend als Dichtlage bezeichnet. Die Dichtlage dichtet das Faservlies gegen das Fluid, das den Druck gegen das Faservlies zur Verdichtung und Umformung aufbaut, insbesondere die Umgebungsluft, ab. Aufgrund dessen können Freiformen in großer Flexibilität an sehr einfachen Werkzeugen erzeugt werden. Durch die angewandte Druckdifferenz können außerdem deutlich geringere Trocknungstemperaturen angewendet werden. Dies wird durch den nachfolgend beschriebenen Effekt erreicht.

Kern der vorliegenden Erfindung ist nämlich die energiesparende Nutzung des Dampfüberganges von Wasser bei Drücken unterhalb von 1013 mbar, neben der vereinfachten Formgebung. So kann ein Verdampfen von Wasser, gleichbedeutend mit der Trocknung des Bauteils, beispielsweise bei 50 mbar und 40 °C oder 100 mbar und 60 °C stattfinden, anstatt das Verdampfen in herkömmlicher Weise allein durch Zufuhr von Wärme und damit unter hohem Energieaufwand hervorzurufen. Eine rein mechanische Trocknung entspräche einer Prozessführung bei Raumtemperatur, also ohne Wärmeeintrag mittels Ofen, Wasserbad, Mikrowelle oder auf andere Weise, nur durch Anlegen des Vakuums. So sind jedoch maximal 15 % des enthaltenen Restwassers im Faservlies entziehbar und eine vollständige Trocknung nicht möglich.

Der herausragende Vorteil der vorliegenden Erfindung liegt in einem hohen Energieeinsparpotenzial. Das vorgeschlagene Verfahren ist zudem geeignet für den vereinfachten Prototypenbau für Faserformteile. Es kann zudem über die Bereitstellung eines entsprechend vorbereiteten Faservlieses zur Herstellung von Bauteilen mit variierenden Wandstärken genutzt werden. Insgesamt ermöglicht das Verfahren eine Reduzierung des Werkzeugaufwandes und so die Herstellung kleiner und mittlerer Stückzahlen sowie weiterhin die Nutzbarmachung von Naturfasern aus Reststoffen und kleineren Rohstoffmengen wie bspw. Stroh, Flachs, Hanf. Im Ergebnis steht eine Kosteneinsparung in der Fertigung durch die Reduzierung von Handarbeit.

Nach einer vorteilhaften Ausgestaltung des erfindungsgemäßen Verfahrens beträgt die durch Unterdruck hervorgerufene Druckdifferenz zwischen 1 und 500 mbar, bevorzugt zwischen 50 und 100 mbar. Das Formteil wird vorteilhafterweise zusammen mit der evakuierten Dichtlage bzw. einem daraus gebildeten Vakuumsack erwärmt. Die Erwärmung erfolgt bevorzugt auf eine Temperatur zwischen 40 und 140 °C. Sowohl die hohe Druckdifferenz als auch die erhöhte Temperatur führen zum Verdampfen des Wassers im Faservlies, sodass diese getrocknet wird und die Aktivierung der Bindekräfte zwischen den Fasern erfolgt. Allerdings liegt die Temperatur deutlich unter der nach dem Stand der Technik üblichen, womit eine erhebliche Einsparung von Energie einhergeht. Je höher die Temperatur, desto schneller die Trocknung. Der bevorzugte Temperaturbereich liegt zwischen 40 und 140 °C. Der bevorzugte Druckbereich liegt zwischen 1 und 500 mbar sein, in Abhängigkeit der die Vakuumpumpe generierten Drücke und unter Berücksichtigung des Dampfdrucks bei der jeweiligen Temperatur. Sofern Differenzdrücke genannt werden, liegt der Bereich zwischen 999 und 500 mbar, sofern der Atmosphärendruck als Bezug gilt. Wenn ein Autoklav verwendet wird, ist ein höherer Differenzdruck erreichbar.

Stellt man die Apparatur in einem Autoklaven auf, sind höhere Differenzdrücke erreichbar, bis ca. 10 bar. Da ist der komprimierende und formgebende Fluiddruck nicht der atmosphärische Druck, sondern der im Autoklaven erzeugte Druck. Durch höhere Druckdifferenzen können Bauteile höherer Dichte erlangt werden. Die Trocknung kann auch als Sublimation durchgeführt werden.

Die vorgesehene Druckdifferenz wird bevorzugt mittels einer Vakuumpumpe erzeugt.

Das aus dem Formteil abgezogene Wasserdampf-Luft-Gemisch wird nach einer bevorzugten Ausgestaltung des erfindungsgemäßen Verfahrens über eine Kühlfalle und eine Wasserfalle geführt, ehe die nun getrocknete Luft zur Vakuumpumpe gelangt. Alternativ sind andere Verfahren zum Abscheiden des Wassers vorgesehen, beispielsweise wird das Wasser bereits unter der Dichtlage bzw. im Vakuumsack an einer gekühlten Kondensationsfläche in flüssigem oder festem Aggregatzustand abgeschieden. Die bei der Kälteerzeugung frei werdende Wärme wird bevorzugt zur Beheizung des Formteils verwendet.

Die Dichtlage ist vorgesehen zur Verwendung in einer Vorrichtung zur Herstellung von dreidimensionalen Formteilen durch Verdichten und Umformen eines Faservlieses aus einem bahnförmigen Faserwerkstoff. Die Dichtlage und deren Randdichtung sind für ein Fluid, das von der vom Faservlies abgewandten Seite aus einwirkt, undurchdringlich. Die Dichtlage umfasst wenigstens einen Anschlussstutzen zum Anschluss einer Vakuumleitung.

Eine vorteilhafte Weiterbildung sieht zudem vor, dass neben dem Anschluss der Vakuumleitung ein bevorzugt regulierbarer Lufteinlass vorgesehen ist. Ein definierter Zustrom trockener Luft ermöglicht eine Luftströmung durch die Abstandsschicht hindurch. Dabei wird die trockene Luft mit Feuchtigkeit aufgeladen und ein Wasserdampf-Luft-Gemisch gebildet, um dieses über den Anschluss der Vakuumleitung abzutransportieren. Dort wird die Feuchtigkeit später durch Kondensation und über eine Wasserfalle abgeschieden. Der Zustrom trockener Luft wird, bevorzugt mittels eines Lufteinlassventils, auf einen solchen Volumenstrom bzw. eine solche Menge begrenzt, dass der eingestellte Unterdruck weiterhin erhalten bleibt und der Trocknungsprozess beschleunigt bzw. positiv beeinflusst wird.

Nach der Erfindung umfasst zumindest die bei der Formgebung dem Faservlies zugewandte Innenseite des Vakuumsacks zumindest in dem Bereich, der zum Kontakt mit dem Faservlies vorgesehen ist, eine Abstandsschicht. Diese ist um zwei Achsen umformbar, sodass kaum Beschränkungen bei der Formgebung für das Formteil bestehen. Die Abstandsschicht weist auch eine ausreichende Druckstabilität auf, um den Umformvorgang zu ermöglichen, ohne durch übermäßige Kompression die Durchleitung des Wasserdampf-Luft-Gemischs zu behindern.

Die Abstandsschicht weist weiterhin eine solche Porosität auf, die eine gleichmäßige Evakuierung und eine ungehinderte Abführung des Wasserdampfs über den wenigstens einen Anschlussstutzen ermöglicht. Diese Eigenschaft ermöglicht die wesentliche Funktion der Erfindung.

Die Abstandsschicht ist als ein technisches Abstandstextil, mittels feiner Abstandsgewebe, Abstandsgewirke, Ringgewebe oder anderer dreidimensionaler Kunststoff-Gewirke ausgeführt. Damit lässt sich die Verformbarkeit sichern, die fertigungsbedingte Maschengröße und damit die Ausbildung der dampfführenden Kanäle steuern und insbesondere durch die Materialauswahl die erforderliche Druckfestigkeit erreichen, um auch unter Druckbelastung den entweichenden Dampf weiterleiten zu können.

Die Bestandteile der Dichtlage sind vorteilhafterweise temperaturbeständig bis zur maximal vorgesehenen Trocknungstemperatur, beispielsweise bis 200 °C, ausgeführt, da die Dichtlage bzw. der Vakuumsack insgesamt in einer Trocknungseinrichtung oder Autoklaven verweilen können soll. Bei hoher Temperatur ist eine besonders kurze Trockenzeit erreichbar. Als Trocknungseinrichtung kommen beispielsweise ein Trockenofen, ein Wasserbad oder eine Mikrowelleneinrichtung in Betracht.

Die Dichtlage ist nach einer vorteilhaften Ausführungsform mit ihrer vollständig umlaufenden Randdichtung mit einer Dichtunterlage verbunden und bildet mit dieser zusammen einen Vakuumsack, der das Faservlies und die Formkontur vollständig und dicht umschließen kann. Durch die Dichtlage, die Dichtunterlage und die Randdichtung kann kein unter Druck anliegendes Fluid eindringen. Vorteilhafterweise handelt es sich bei dem Fluid um die unter atmosphärischem Druck stehende Umgebungsluft, die bei Evakuierung des Vakuumsacks einen entsprechenden Druck auf das zu verformende Faservlies aufbringt. Bei Einsatz eines Autoklaven ist das Fluid das im Autoklaven unter Druck stehende Gas bzw. die darin befindliche Luft.

Alternativ zum vorgenannten Vakuumsack kann die Dichtlage im Randbereich, mit ihrer dort vorhandenen Randdichtung, mit einer Grundplatte, auf der das Faservlies und die Formkontur anordenbar sind, fluiddicht verbunden werden. Dann bildet die Grundplatte eine Dichtunterlage und ein unter Druck anliegendes Fluid kann nicht eindringen.

Die Erfindung betrifft weiterhin eine Vorrichtung zur Durchführung eines Verfahrens zur Herstellung eines Formteils aus einem Faserwerkstoff durch Verdichten und insbesondere dreidimensionales Umformen des als ein Faservlies vorliegt. Das Faservlies ist bevorzugt bahnförmig, in einem vorteilhaften Nassverfahren, damit bindemittelfrei, hergestellt. Das Faservlies, besonders bevorzugt ein mehrlagiges, verdichtbares, feuchtes Vlies des vorliegenden Faserwerkstoffs, wird mittels einer Formkontur umgeformt. Die Formkontur gibt die spätere Form des Formteils vor. Die Verdichtung und das Umformen des Faservlieses erfolgen durch ein unter Druck stehendes Fluid. Dabei wird das Faservlies mit einer ersten, der Formkontur zugewandten Seite gegen die Formkontur gedrückt, wobei der Fluiddruck von der zweiten, von der Formkontur abgewandten Seite her wirkt. Der Fluiddruck wird durch Evakuieren, das Erzeugen einer Druckdifferenz, in dem Faservlies von der ersten Seite des Faservlieses her erzeugt, sodass die Druckdifferenz zum vorherrschenden Luftdruck den Fluiddruck hervorruft, der auf die zweite Seite des Faservlieses zumindest in Höhe einer Differenz beispielsweise zum Umgebungsluftdruck oder zu einem Autoklavendruck einwirkt.

Eine über die gesamte Fläche fluiddichte Dichtlage wird über dem Faservlies, an der zweiten Seite des Faservlieses, fluiddicht angebracht. Die Dichtlage verhindert das Eindringen des Fluids, insbesondere der Umgebungsluft, in das Faservlies, wobei die Dichtlage auch einen das Faservlies vollständig umgebenden Vakuumsack bilden kann. Die Dichtlage umfasst auch wenigstens einen Anschlussstutzen zur Verbindung mit einer Vakuumpumpe und ergänzenden Systemen zur Erzeugung des Unterdrucks.

Erfindungsgemäß ist die erforderliche Druckdifferenz geringer als der Dampfdruck von Wasser bei der jeweils angewandten Trocknungstemperatur. Wird der Druck auf beispielsweise 100 mbar gesenkt, verdampft das Wasser bei ca. 40 °C. Zusätzlich zum jeweils gewählten Druck-/Temperaturverhältnis wird der Trocknungsvorgang noch durch das Trockengut umgebende Medium bestimmt. In einem Umluftofen kann feuchte Luft schneller abtransportiert werden, wodurch schneller getrocknet wird.

Die bei Kompression aus dem Faservlies entweichende Luft und durch Verdampfen des Wassers aus dem Faservlies entstehender Wasserdampf werden als ein Wasserdampf-Luft-Gemisch über eine Abstandsschicht von der Oberfläche des Faservlieses abgeführt. Die Abstandsschicht ist an der Dichtlage oder dem Vakuumsack an der Innenseite zumindest in dem zum Faservlies hin weisenden Bereich angeordnet.

Bestandteil der Vorrichtung ist auch die zuvor beschriebene Dichtlage, wobei die Dichtlage und deren Randdichtung für ein Fluid, das von der vom Faservlies abgewandten Seite aus einwirkt, undurchdringlich ist, wobei die Dichtlage wenigstens einen Anschlussstutzen zum Anschluss einer Vakuumleitung umfasst. Erfindungsgemäß umfasst zumindest die bei der Formgebung dem Faservlies zugewandte Innenseite des Vakuumsacks zumindest in dem Bereich, der zum Kontakt mit dem Faservlies vorgesehen ist, eine Abstandsschicht. Diese ist um zwei Achsen umformbar, weist eine ausreichende Druckstabilität auf, um den Umformvorgang zu ermöglichen, weist weiterhin eine solche Porosität auf, die eine gleichmäßige Evakuierung und eine ungehinderte Abführung des Wasserdampfs über den wenigstens einen Anschlussstutzen ermöglicht.

Da ein Laminieren der Schichten durchgeführt wird, können auch Langfasern, Gewebe oder Gelege eingebracht werden. Wenn diese ein bei geringen Temperaturen schmelzenden Thermoplast oder ein durch die Trocknung vernetzendes Polymer beinhalten, wäre durch den Herstellungsprozess auch automatisch eine Implementierung der Verstärkungsfasern möglich. Auf diese Weise würden Faserverbunde bzw. Kompositwerkstoffe entstehen.

Die Vorrichtung umfasst vorteilhafterweise eine Vakuumpumpe zur Erzeugung des Unterdrucks, der die Druckdifferenz hervorruft, im gesamten System, eine Wasserfalle zum Abfangen von Kondenswasser vor der Vakuumpumpe, eine Kühlfalle, in der der Wasserdampf auskondensiert wird und einer Trocknungseinrichtung, in die die Dichtlage mit umschlossenem Faservlies bzw. der gesamte Vakuumsack mit seinem Inhalt eingebracht werden können. Die Trocknungseinrichtung kann auch als Autoklav ausgeführt sein und einen erhöhten Differenzdruck im Faservlies hervorrufen. Alternativ können beheizte Werkzeuge bzw. eine beheizte Formkontur eingesetzt werden.

Die Erfindung vereinfacht herstellungstechnisch die Fertigung von Prototypen bis hin zu mittleren Stückzahlen von Faserformteilen. Dabei werden nicht nur die Entwässerung, sondern auch die Verdichtung und die Trocknung in einem Unterdruckverfahren und ohne zusätzliche Verfahrensschritte durchgeführt.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Darstellung einer Ausführungsform einer erfindungsgemäßen Vorrichtung zur Herstellung von dreidimensionalen Formteilen;
Fig. 2: eine Schnittdarstellung eines Details einer schematischen Darstellung einer Ausführungsform einer erfindungsgemäßen Vorrichtung zur Herstellung von dreidimensionalen Formteilen vor dem Beginn des Evakuierungsvorgangs;
Fig. 3: eine Schnittdarstellung eines Details einer schematischen Darstellung einer Ausführungsform einer erfindungsgemäßen Vorrichtung zur Herstellung von dreidimensionalen Formteilen während des Evakuierungsvorgangs und
Fig. 4: eine Schnittdarstellung eines Details einer schematischen Darstellung einer Ausführungsform einer erfindungsgemäßen Vorrichtung zur Herstellung von dreidimensionalen Formteilen am Ende des Evakuierungsvorgangs.

Fig. 1 zeigt eine schematische Darstellung einer Ausführungsform einer erfindungsgemäßen Vorrichtung 1 zur Herstellung eines dreidimensionalen Formteils 9' aus einem Faservlies 9. Dieses ist dazu über einer Formkontur 7 angeordnet, die der Form des späteren Formteils 9' entspricht. Die Formkontur 7 ist auf einer Grundplatte 11 angeordnet, auf der zugleich ein komplett verschließbarer Vakuumsack aufliegt oder, wie im dargestellten Ausführungsbeispiel ausgeführt, eine Dichtlage 12 aufgelegt und über eine Randdichtung 16 mit der Grundplatte 11 gasdicht verbunden ist. Im Falle eines Vakuumsacks ist die Formkontur 7 mit dem Faservlies 9 in den Vakuumsack eingebracht, der nachher verschlossen wird. Im vorliegenden Fall wird die Dichtlage 12 über Formkontur 7 und Faservlies 9 gelegt und über die Randdichtung 16 mit der Grundplatte 11 verbunden.

Die Dichtlage 12 oder der Vakuumsack sind mit wenigstens einem, im dargestellten Ausführungsbeispiel zwei Anschlussstutzen 18 versehen. Hieran werden die Vakuumleitungen 32 angeschlossen. Sobald der Unterdruck 30 an den Vakuumleitungen 32 anliegt, kann der zu evakuierende Bereich 30' evakuiert werden. Damit legt sich die Dichtlage 12 fest um das Faservlies 9 und beaufschlagt dieses mit dem erwünschten Unterdruck 30.

Der gesamte zuvor beschriebene Aufbau zwischen Grundplatte 11 und Dichtlage 12 wird zum Anschluss an die Vakuumleitung 32 in eine Trocknungseinrichtung 5 eingebracht, die im Ausführungsbeispiel als ein Trockenofen ausgeführt ist. Dessen Ofengehäuse 50 trennt den Innenraum gegenüber der Umgebung ab und ermöglicht ein Aufheizen über die Heizungen 52 auf die jeweils gewünschte Trocknungstemperatur, die das Verdampfen des im Faservlies 9 enthaltenen Wassers bei Unterdruck 30 bzw. der Druckdifferenz unterstützt.

Über die Vakuumleitungen 32 wird das aus dem Faservlies 9 entweichende Wasserdampf-Luft-Gemisch 35 abgesaugt und, idealerweise bei stetem Gefälle bis zur Wasserfalle 34, der Kühlfalle 40 zugeführt. Dort wird das Wasserdampf-Luft-Gemisch 35 mittels Kühlschlangen (hier vereinfacht dargestellt als Kühlschlangenblock 42) durch ein Kühlfluid 44 geführt. Dieses weist bei dem bevorzugten Verfahrensablauf eine Temperatur unterhalb der Verdampfungstemperatur, beispielsweise zwischen 4 °C und 25 °C, auf. Dabei kondensiert der Wasserdampf aus. Das in der Wasserfalle 34, die die Vakuumpumpe 31 vor eindringenden Wasser schützt, ausfallende Kondenswasser 36 sammelt sich am Boden der Wasserfalle 34.

Fig. 2 zeigt eine Schnittdarstellung eines Details einer schematischen Darstellung einer Ausführungsform einer erfindungsgemäßen Vorrichtung zur Herstellung von dreidimensionalen Formteilen 9' vor dem Beginn des Evakuierungsvorgangs. So wie in den Figuren 3 und 4 auch erfolgt die Darstellung nur teilweise und ist an der rechten Seite abgebrochen gezeichnet.

Das Faservlies 9 hat noch seine ursprüngliche Höhe und liegt auf der Grundplatte 11 sowie auf der Formkontur 7 auf. Die Formkontur 7 ist zur Vereinfachung unspezifisch und flach dargestellt. Die Dichtlage 12 umgibt das Faservlies und ist mittels ihrer Randdichtung 16 fluiddicht bzw. gasdicht mit der Grundplatte 11 verbunden. Über den Anschlussstutzen 18 kann zur Herstellung des erforderlichen Unterdrucks eine Vakuumleitung angeschlossen werden. Deutlich erkennbar ist die Abstandsschicht 14 zwischen der äußeren Hülle der Dichtlage 12 und dem Faservlies 9.

Fig. 3 zeigt eine Schnittdarstellung eines Details einer schematischen Darstellung einer Ausführungsform einer erfindungsgemäßen Vorrichtung zur Herstellung von dreidimensionalen Formteilen 9' während des Evakuierungsvorgangs. Über den Anschlussstutzen 18 wird das Wasserdampf-Luft-Gemisch 35 abgesaugt und ein Unterdruck 30 erzeugt. Das Faservlies 9 zeigt sich nun im Vergleich zur vorherigen Darstellung in Fig. 2 bereits teilweise komprimiert.

Fig. 4 zeigt eine Schnittdarstellung eines Details einer schematischen Darstellung einer Ausführungsform einer erfindungsgemäßen Vorrichtung zur Herstellung von dreidimensionalen Formteilen 9' am Ende des Evakuierungsvorgangs. Dabei hat das Faservlies 9 seine Endhöhe erreicht und ist mittels Unterdrucks 30 in der Abstandsschicht 14 und in dem Faservlies 9 bzw. dem von außen wirkenden Fluiddruck zum Formteil 9' verdichtet worden.

### Bezugszeichenliste

- 1: Vorrichtung
- 3: Evakuierungseinrichtung
- 5: Trocknungseinrichtung
- 7: Formkontur
- 9: Faservlies
- 9`: Formteil
- 11: Grundplatte
- 12: Dichtlage
- 14: Abstandsschicht
- 16: Randdichtung
- 18: Anschlussstutzen
- 30: Unterdruck bzw. Druckdifferenz
- 30': zu evakuierender Bereich
- 31: Vakuumpumpe
- 32: Vakuumleitung
- 34: Wasserfalle
- 35: Wasserdampf-Luft-Gemisch
- 36: Kondenswasser
- 40: Kühlfalle
- 42: Kühlschlangenblock
- 44: Kühlfluid
- 50: Ofengehäuse
- 52: Heizung

## Patentansprüche

1. Verfahren zur Herstellung eines Formteils aus einem Faserwerkstoff durch Verdichten und Umformen des als ein Faservlies (9) vorliegenden Faserwerkstoffs mittels einer Formkontur (7), die die spätere Form des Formteils (9') vorgibt, wobei die Verdichtung und das Umformen des Faservlieses (9) durch ein unter Druck stehendes Fluid erfolgen, indem das Faservlies (9) gegen die Formkontur (7) gedrückt wird, wobei der Fluiddruck durch Evakuieren in dem Faservlies (9) als ein Unterdruck (30) erzeugt wird, wobei eine über die gesamte Fläche fluiddichte Dichtlage (12), die für ein Fluid, das von der vom Faservlies (9) abgewandten Seite aus unter Druck einwirkt, undurchdringlich ist, und wobei die Dichtlage (12) wenigstens einen Anschlussstutzen (18) zum Anschluss einer Vakuumleitung (32) umfasst, über dem Faservlies (9) fluiddicht angebracht wird, wobei die Dichtlage (12) das Eindringen des Fluids in das Faservlies (9) verhindert, **dadurch gekennzeichnet, dass** die Dichtlage (12) als eine Vakuummembran ausgeführt ist und zumindest die bei der Formgebung dem Faservlies (9) zugewandte Innenseite der Dichtlage (12) zumindest in dem Bereich, der zum Kontakt mit dem Faservlies (9) vorgesehen ist, eine Abstandsschicht (14) umfasst, die als ein technisches Abstandstextil mittels feiner Abstandsgewebe, Abstandsgewirke, Ringgewebe oder anderer dreidimensionaler Kunststoff-Gewirke ausgeführt ist und eine ausreichende Druckstabilität aufweist, um den Umformvorgang zu ermöglichen, eine solche Porosität aufweist, die eine gleichmäßige Evakuierung und eine ungehinderte Abführung eines im Unterdruck (30) entstehenden Wasserdampf-Luft-Gemischs (35) über den wenigstens einen Anschlussstutzen (18) ermöglicht, wobei die Abstandsschicht (14) um zwei Achsen umformbar ist, wobei das Faservlies zur Trocknung auf eine Trocknungstemperatur erwärmt wird und der Unterdruck (30) den Dampfdruck von Wasser bei der Trocknungstemperatur unterschreitet und wobei durch Verdampfen des Wassers aus dem Faservlies (9) entstehender Wasserdampf über die Abstandsschicht (14) von der Oberfläche des Faservlieses (9) abgeführt wird, die die Dichtlage (12) an ihrer Innenseite zumindest in dem zum Faservlies (9) hin weisenden Bereich aufweist.

2. Verfahren nach Anspruch 1, wobei der Unterdruck (30) im Druckbereich zwischen 1 und 500 mbar liegt.

3. Verfahren nach Anspruch 1 oder 2, wobei das unter der evakuierten Dichtlage (12) eingeschlossene Formteil (9') erwärmt wird, wobei die Erwärmung auf eine Temperatur zwischen 40 und 140 °C erfolgt.

4. Verfahren nach einem der vorherigen Ansprüche, wobei durch Verdampfen des Wassers aus dem Faservlies (9) entstehender Wasserdampf weiterhin von der zur Formkontur (7) weisenden Oberfläche des Faservlieses (9) über eine Abstandsschicht zumindest an der zum Faservlies (9) weisenden Oberfläche der Formkontur (7) abgeführt wird.

5. Verfahren nach einem der vorherigen Ansprüche, wobei der Unterdruck (30) mittels einer Vakuumpumpe (31) erzeugt wird und ein aus dem Formteil (9') abgezogenes Wasserdampf-Luft-Gemisch (35) über eine Kühlfalle (40) und eine Wasserfalle (34) geführt wird, ehe das Wasserdampf-Luft-Gemisch (35) zur Vakuumpumpe (31) gelangt.

6. Verfahren nach Anspruch 5, wobei trockene Luft in solcher Menge in die Abstandsschicht (14) einströmt und als Wasserdampf-Luft-Gemisch (35) abgeführt wird, dass der eingestellte Unterdruck (30) erhalten bleibt.

7. Vorrichtung zur Durchführung eines Verfahrens nach einem der Ansprüche 1 bis 6, **dadurch gekennzeichnet, dass** eine Dichtlage (12) umfasst ist, wobei die Dichtlage (12) und eine an deren Randbereich angeordnete Randdichtung (16) für ein Fluid, das von der vom Faservlies (9) abgewandten Seite aus unter Druck einwirkt, undurchdringlich ist, wobei die Dichtlage (12) wenigstens einen Anschlussstutzen (18) zum Anschluss einer Vakuumleitung (32) umfasst, wobei die Dichtlage (12) als eine Vakuummembran ausgeführt ist und zumindest die bei der Formgebung dem Faservlies (9) zugewandte Innenseite der Dichtlage (12) zumindest in dem Bereich, der zum Kontakt mit dem Faservlies (9) vorgesehen ist, eine Abstandsschicht (14) umfasst, die als ein technisches Abstandstextil mittels feiner Abstandsgewebe, Abstandsgewirke, Ringgewebe oder anderer dreidimensionaler Kunststoff-Gewirke ausgeführt ist und die eine ausreichende Druckstabilität aufweist, um den Umformvorgang zu ermöglichen, eine solche Porosität aufweist, die eine gleichmäßige Evakuierung und eine ungehinderte Abführung eines im Unterdruck (30) entstehenden Wasserdampf-Luft-Gemischs (35) über den wenigstens einen Anschlussstutzen (18) ermöglicht, wobei die Abstandsschicht (14) um zwei Achsen umformbar ist.

8. Vorrichtung nach Anspruch 7, wobei die Dichtlage (12) mit ihrer Randdichtung (16) mit einer Dichtunterlage verbunden ist und mit dieser zusammen einen Vakuumsack bildet, der das Faservlies (9) und die Formkontur (7) vollständig fluiddicht umschließen kann.

9. Vorrichtung nach einem der Ansprüche 7 bis 8, wobei die Dichtlage (12) mit ihrer Randdichtung (16) mit einer Grundplatte (11), auf der das Faservlies (9) und die Formkontur (7) anordenbar sind, fluiddicht verbunden werden kann.

10. Vorrichtung nach einem der Ansprüche 7 bis 9, wobei neben dem Anschluss einer Vakuumleitung (32) ein Lufteinlass vorgesehen ist.

11. Vorrichtung nach einem der Ansprüche 7 bis 10, weiterhin umfassend eine Vakuumpumpe (31), eine Wasserfalle (34), eine Kühlfalle (40) und eine Trocknungseinrichtung (5).

## Claims

1. A method for producing a moulded component made of fibre material by compressing and reshaping the fibre material present as a fibre fleece (9) by means of a mould contour (7) which predetermines the subsequent shape of the moulded component (9'), wherein the compression and the reshaping of the fibre fleece (9) are effected by means of a pressurised fluid by pressing the fibre fleece (9) against the mould contour, wherein the fluid pressure is generated by evacuating the fibrous web (9) as a vacuum (30), wherein a sealing layer (12) that is fluid-tight over the entire surface and impenetrable to a fluid that acts under pressure from the side facing away from the fibrous web (9) is provided, and wherein the sealing layer (12) comprises at least comprises at least one connection piece (18) for connecting a vacuum line (32), is mounted in a fluid-tight manner above the fibrous fleece (9), wherein the sealing layer (12) prevents the fluid from penetrating into the fibrous fleece (9), **characterised in that** the sealing layer (12) is designed as a vacuum membrane and at least the inner side of the sealing layer (12) facing the fibrous fleece (9) during shaping facing the fibrous web (9) during the shaping process, at least in the area provided for contact with the fibrous web (9), comprises a spacer layer (14) which is designed as a technical spacer textile by means of fine spacer fabrics, spacer knitted fabrics, ring fabrics or other three-dimensional plastic knitted fabrics and has sufficient pressure stability to enable the shaping process, and has a porosity which allows a uniform evacuation and an unimpeded discharge of a water vapour-air mixture (35) arising in the reduced pressure (30) via the at least one connection nozzle (18), wherein the spacer layer (14) is deformable about two axes, wherein the fibrous fleece is heated for drying to a drying temperature and the vapour pressure (30) falls below the vapour pressure of water at the drying temperature and wherein water vapour arising from evaporation of water from the fibrous fleece (9) is removed from the surface of the fibrous fleece (9) via the spacer layer (14), which the sealing layer (12) has on its inside at least in the region facing the fibrous fleece (9).

2. The method according to claim 1, wherein the vacuum pressure (30) is in the pressure range between 1 and 500 mbar.

3. The method according to claim 1 or 2, wherein the moulding (9') enclosed under the evacuated sealing layer (12) is heated, the heating being carried out to a temperature between 40 and 140°C.

4. The method according to one of the previous claims, wherein water vapour arising from the fibre fleece (9) due to evaporation of the water from the fibre fleece (9) is further removed from the surface of the fibre fleece (9) facing the mould contour (7) via a spacer layer at least on the surface of the mould contour (7) facing the fibre fleece (9).

5. The method according to one of the previous claims, wherein the vacuum (30) is generated by means of a vacuum pump (31) and a water vapour-air mixture (35) drawn off from the mould part (9') is passed over a cold trap (40) and a water trap (34) before the water vapour-air mixture (35) reaches the vacuum pump (31).

6. The method according to claim 5, wherein dry air flows into the spacing layer (14) in such an amount and is discharged as a water vapour-air mixture (35) that the set vacuum (30) is maintained.

7. A device for carrying out a method according to one of claims 1 to 6, **characterised in that** a sealing layer (12) is included, wherein the sealing layer (12) and an edge seal (16) arranged on the edge region thereof are impenetrable for a fluid that acts under pressure from the side facing away from the fibrous fleece (9) , wherein the sealing layer (12) comprises at least one connection piece (18) for connecting a vacuum line (32), wherein the sealing layer (12) is designed as a vacuum membrane and at least the inside of the sealing layer (12) facing the fibrous fleece (9) during shaping 2) comprises, at least in the region which is provided for contact with the fibrous fleece (9), a spacer layer (14) which is designed as a technical spacer textile by means of fine spacer fabrics, spacer knitted fabrics, ring fabrics or other three-dimensional plastic knitted fabrics and which has sufficient pressure stability to enable the forming process, has a porosity which allows a uniform evacuation and an unimpeded discharge of a water vapour-air mixture (35) arising in the reduced pressure (30) via the at least one connection piece (18), wherein the spacer layer (14) is deformable about two axes.

8. The device according to claim 7, wherein the sealing layer (12) is connected by its edge seal (16) to a sealing underlay and together with the latter forms a vacuum bag which can completely enclose the fibrous fleece (9) and the mould contour (7) in a fluid-tight manner.

9. The device according to one of the claims 7 to 8, wherein the sealing layer (12) can be connected in a fluid-tight manner by means of its edge seal (16) to a base plate (11) on which the fibre fleece (9) and the mould contour (7) can be arranged.

10. The device according to one of the claims 7 to 9, wherein an air inlet is provided in addition to the connection of a vacuum line (32).

11. The device according to one of the claims 7 to 10, further comprising a vacuum pump (31), a water trap (34), a cold trap (40) and a drying device (5).

## Revendications

1. Procédé de fabrication d'une pièce moulée en un matériau fibreux par compactage et façonnage du matériau fibreux présent en tant que non tissé fibreux (9) au moyen d'un contour de moule (7) qui prédéfinit la forme ultérieure de la pièce moulée (9'), dans lequel le compactage et le façonnage du non tissé fibreux (9) s'effectuent par un fluide sous pression en ce que le non tissé fibreux (9) est pressé contre le contour de moule (7), dans lequel la pression fluidique est générée par évacuation dans le non tissé fibreux (9) en tant que dépression (30), dans lequel une couche d'étanchéité (12) étanche au fluide sur la face entière qui est impénétrable pour un fluide qui agit sous pression depuis le côté détourné du non tissé fibreux (9), et dans lequel la couche d'étanchéité (12) comprend au moins une tubulure de raccord (18) pour le raccord d'une conduite sous vide (32) par le biais de laquelle le non tissé fibreux (9) est appliqué de manière étanche au fluide, dans lequel la couche d'étanchéité (12) empêche la pénétration du fluide dans le non tissé fibreux (9), **caractérisé en ce que** la couche d'étanchéité (12) est réalisée en tant que membrane sous vide et au moins le côté interne de la couche d'étanchéité (12) tourné vers le non tissé fibreux (9) lors du façonnage comprend au moins dans la région qui est prévue pour le contact avec le non tissé fibreux (9) une couche d'espacement (14) qui est réalisée en tant que textile d'espacement technique au moyen d'un tissu d'espacement fin, d'un tricot d'espacement, d'un tissu annulaire ou d'un autre tricot synthétique tridimensionnel et présente une stabilité à la pression suffisante pour permettre le processus de façonnage, présente une porosité telle qu'elle permet une évacuation uniforme et une extraction libre d'un mélange de vapeur d'eau-air (35) apparaissant dans la dépression (30) par le biais de l'au moins une tubulure de raccord (18), dans lequel la couche d'espacement (14) peut être façonnée autour de deux axes, dans lequel le non tissé fibreux est chauffé pour le séchage à une température de séchage et la dépression (30) dépasse par le bas la pression de vapeur de l'eau à la température de séchage, et dans lequel de la valeur d'eau apparaissant par évaporation de l'eau du non tissé fibreux (9) est extraite par le biais de la couche d'espacement (14) de la surface du non tissé fibreux (9) qui présente la couche d'étanchéité (12) sur son côté interne au moins dans la région tournée vers le non tissé fibreux (9).

2. Procédé selon la revendication 1, dans lequel la dépression (30) se situe dans la région de pression comprise entre 1 et 500 mbar.

3. Procédé selon la revendication 1 ou 2, dans lequel la pièce moulée (9') incluse sous la couche d'étanchéité évacuée (12) est chauffée, dans lequel le chauffage s'effectue à une température comprise entre 40 et 140 °C.

4. Procédé selon une des revendications précédentes, dans lequel de la vapeur d'eau apparaissant par évaporation de l'eau du non tissé fibreux (9) est en outre extraite de la surface du non tissé fibreux (9) tournée vers le contour de moule (7) par le biais d'une couche d'espacement au moins sur la surface du contour de moule (7) tournée vers le non tissé fibreux (9).

5. Procédé selon une des revendications précédentes, dans lequel la dépression (30) est générée au moyen d'une pompe à vide (31) et un mélange de vapeur d'eau-air (35) prélevé de la pièce moulée (9') est guidé par le biais d'une trappe de refroidissement (40) et d'une trappe d'eau (34) avant que le mélange de vapeur d'eau-air (35) ne parvienne à la pompe à vide (31).

6. Procédé selon la revendication 5, dans lequel de l'air sec afflue dans une quantité telle dans la couche d'espacement (14) et est extrait en tant que mélange de vapeur d'eau-air (35) que la dépression réglée (30) est maintenue.

7. Dispositif pour la réalisation d'un procédé selon une des revendications 1 à 6, **caractérisé en ce qu'**une couche d'étanchéité (12) est comprise, dans lequel la couche d'étanchéité (12) et un joint de bord (16) disposé sur sa région de bord sont impénétrables pour un fluide qui agit sous pression depuis le côté détourné du non tissé fibreux (9), dans lequel la couche d'étanchéité (12) comprend au moins une tubulure de raccord (18) pour le raccord d'une conduite sous vide (32), dans lequel la couche d'étanchéité (12) est réalisée en tant que membrane sous vide et au moins le côté interne de la couche d'étanchéité (12) tourné vers le non tissé fibreux (9) lors du façonnage comprend au moins dans la région qui est prévue pour le contact avec le non tissé fibreux (9) une couche d'espacement (14) qui est réalisée en tant que textile d'espacement technique au moyen d'un tissu d'espacement fin, d'un tricot d'espacement, d'un tissu annulaire ou d'un autre tricot synthétique tridimensionnel et qui présente une stabilité à la pression suffisante pour permettre le processus de façonnage, présente une porosité telle qu'elle permet une évacuation uniforme et une extraction libre d'un mélange de vapeur d'eau-air (35) apparaissant dans la dépression (30) par le biais de l'au moins une tubulure de raccord (18), dans lequel la couche d'espacement (14) peut être façonnée autour de deux axes.

8. Dispositif selon la revendication 7, dans lequel la couche d'étanchéité (12) est connectée avec son joint de bord (16) à une sous-couche d'étanchéité et forme avec celle-ci un sac sous vide qui peut entourer entièrement le non tissé fibreux (9) et le contour de moule (7) de manière étanche au fluide.

9. Dispositif selon une des revendications 7 à 8, dans lequel la couche d'étanchéité (12) peut être connectée de manière étanche au fluide avec son joint de bord (16) à une plaque de base (11) sur laquelle le non tissé fibreux (9) et le contour de moule (7) peuvent être disposés.

10. Dispositif selon une des revendications 7 à 9, dans lequel une entrée d'air est prévue à côté du raccord d'une conduite sous vide (32).

11. Dispositif selon une des revendications 7 à 10, comprenant en outre une pompe à vide (31), une trappe d'eau (34), une trappe de refroidissement (40) et une installation de séchage (5).
